# FASCICULE DE BREVET EUROPEEN

(11) **EP 2 658 665 B1**
(45) Date de publication et mention de la délivrance du brevet: **05.12.2018**
(21) Numéro de dépôt: 11813882.5
(22) Date de dépôt: 28.12.2011
(51) Int. Cl.: B22D 25/00, B22C 9/08, C03B 19/08, C22C 1/08

(54) **PREFORME POUR LA REALISATION D'UNE MOUSSE METALLIQUE**
VORFORMLING ZUR HERSTELLUNG EINES METALLSCHAUMS
PREFORM FOR PRODUCING A METAL FOAM

(30) Priorité: 29.12.2010 FR 1005153
(43) Date de publication de la demande: 06.11.2013
(73) Titulaire: Sogefi Filtration, 78280 Guyancourt (FR)
(72) Inventeur: POGGI, Frédéric, F-14380 Mesnil-Clinchamps (FR)
(74) Mandataire: Célanie, Christian
(86) Numéro de dépôt international: PCT/FR2011/000680
(87) Numéro de publication internationale: WO 2012/089935

(56) Documents cités:
- EP-A2- 1 844 881
- EP-B1- 2 118 328
- GOODALL R ET AL: "The effect of preform processing on replicated aluminium foam structure and mechanical properties", SCRIPTA MATERIALIA, ELSEVIER, AMSTERDAM, NL, vol. 54, no. 12, 1 juin 2006 (2006-06-01), pages 2069-2073, XP025028396, ISSN: 1359-6462, DOI: DOI:10.1016/J.SCRIPTAMAT.2006.03.003 [extrait le 2006-06-01]
- GOODALL RUSSELL ET AL: "Spherical pore replicated microcellular aluminium: Processing and influence on properties", MATERIALS SCIENCE AND ENGINEERING A: STRUCTURAL MATERIALS:PROPERTIES, MICROSTRUCTURE & PROCESSING, LAUSANNE, CH, vol. A465, no. 1-2, 1 janvier 2007 (2007-01-01), pages 124-135, XP002482683, ISSN: 0921-5093, DOI: DOI:10.1016/J.MSEA.2007.02.002

## Description

Le secteur technique de la présente invention est celui de la fabrication des mousses métalliques à partir de préformes réalisés avec des précurseurs.

La technologie des mousses métalliques est bien connue et on peut se reporter aux brevets EP-1808 241, US-3236706 et EP-2118328 qui préconisent la fabrication d'une préforme sous forme de granules à partir d'un sel, tel le chlorure de sodium. Après, remplissage de l'espace libre entre les granules à l'aide d'un métal fondu, le sel est dissous pour récupérer la mousse métallique.

Ainsi le brevet EP-2118328 décrit une méthode particulièrement intéressante en proposant de fabriquer une préforme avec des granules à base de farine de grains. On réalise alors une cuisson de cette préforme avant le coulage du métal afin de détruire les chaînes carbonées des granules. Ce brevet prévoit donc d'abord la fabrication d'une pâte constituée de farine, de chlorure de sodium et d'eau. A partir de cette pâte, on prépare des granules qui sont utilisées ensuite pour fabriquer la préforme. On a constaté que ce procédé conduisait, outre la préparation de la pâte, à une fragilité mécanique de la préforme, d'un temps de dissolution important de la préforme avant récupération de la mousse métallique. Enfin, la mousse métallique incorpore des résidus carbonés suite à la pyrolyse et à des résidus salins qu'il est difficile d'éliminer. Enfin plus grave encore, la mousse métallique présente un état de surface imparfait suite à la corrosion et l'oxydation résultant de l'utilisation du chlorure de sodium qui rend problématique son utilisation dans l'industrie.

Le but de la présente invention est de fournir des moyens permettant d'obtenir un état de surface d'une mousse métallique exempte de résidus, une absence de corrosion par l'utilisation d'une préforme particulière et la mise en oeuvre d'un procédé également particulier.

L'invention a donc pour objet une préforme destinée à la fabrication d'une mousse métallique ayant une porosité comprise entre 62 et 85%, caractérisée en ce qu'elle comprend un ensemble de précurseurs se présentant sous la forme de billes constitué d'un mélange de 12 à 25% en masse de liant organique, 72 à 87% en masse de chlorure de sodium et de 1 à 3% en masse de kalinite.

Selon une caractéristique de l'invention, les précurseurs présentent un diamètre de l'ordre de 1 à 10 mm et préférentiellement de 4 mm.

Selon une autre caractéristique de l'invention, les précurseurs sont obtenus par granulation du mélange sur lit d'air fluidisé.

Selon encore une autre caractéristique de l'invention, le liant organique est constitué par de la farine de grains.

Selon encore une autre caractéristique de l'invention, les précurseurs comprennent 17% en masse de farine de grains, 81% en masse de chlorure de sodium et 2% en masse de kalinite.

Selon encore une autre caractéristique de l'invention, les précurseurs comprennent 13% en masse de farine de grains, 84% en masse de chlorure de sodium et 3% en masse de kalinite, ou bien 24% en masse de farine de grains, 74,5% en masse de chlorure de sodium et 1,5% en masse de kalinite.

L'invention concerne également un procédé de fabrication d'une mousse métallique à l'aide de la préforme, caractérisé en ce qu'il comprend les étapes suivantes :
- on introduit les précurseurs dans un moule que l'on soumet à des vibrations afin de délimiter des espaces libres,
- on soumet le moule à un chauffage à une température comprise entre 300 et 600°C pour activer la kalinite, tout en injectant un flux d'air dans le moule pendant la montée en température,
- on maintient la température pendant 10 à 40 minutes,
- on introduit le métal fondu pour remplir les espaces libres entre les précurseurs, et
- on laisse refroidir et on lave la mousse métallique.

Avantageusement, le procédé comprend une étape d'humidification et de séchage des précurseurs avant l'étape de chauffage.

L'humidification est réalisée avec 3 à 10% en masse d'eau par rapport à la masse des précurseurs.

Le métal fondu est un métal pur, en particulier l'aluminium, ou un alliage métallique.

Avantageusement, des noyaux de fonderie sont disposés au sein de la préforme pour réaliser des chemins particuliers.

L'invention concerne encore la mousse métallique à porosités ouvertes obtenue suivant le procédé conforme à l'invention.

Avantageusement, la mousse présente une absence de corrosion de la mousse après lavage et/ou en ce qu'elle présente une absence d'oxydation de la mousse après lavage et/ou par le fait qu'elle est exempte de résidus carbonés après lavage et/ou par le fait qu'elle est exempte de résidus salins après lavage.

Avantageusement encore, la mousse présente une porosité ouverte comprise entre 65 et 85%.

La mousse métallique est à base d'aluminium ou un alliage d'aluminium.

Un tout premier avantage de la présente invention réside dans la facilité de mise en forme de la préforme et sa résistance mécanique qui ne se délite pas.

Un autre avantage de l'invention réside dans le temps extrêmement rapide de l'élimination de la préforme qui peut s'effectuer quasiment instantanément.

Un autre avantage encore de l'invention dans l'absence de corrosion ou d'oxydation de la mousse métallique.

Un autre avantage encore de l'invention réside dans le contrôle de la porosité qu'il est possible d'ajuster en fonction de la taille des précurseurs et des connections possibles entre les précurseurs (agglomération par exemple par humidification).

D'autres caractéristiques, avantages et détails de l'invention seront mieux compris à la lecture du complément de description qui va suivre de modes de réalisation donnés à titre d'exemple.

Dans la suite de la description, on entendra par précurseurs les billes formées à partir du mélange à base de chlorure de sodium. Le liant organique peut être un hydrate de carbone, par exemple de la farine de grains.

Dans la suite de la description, on s'attachera plus particulièrement à la farine, sans que cela constitue une limitation de l'invention pourvu que le composé utilisé joue son rôle de liant organique.

Ainsi, la farine peut être celle communément obtenue à partir de grains de céréale tels le blé, l'orge, le sorgho ou le seigle. Bien entendu, d'autres farines végétales peuvent être utilisées. Cette farine est bien entendu tamisée afin d'obtenir une granulométrie sensiblement constante. On peut utiliser une farine ayant une granulométrie de l'ordre de 200 µm et avantageusement inférieure à 150 µm.

Le chlorure de sodium utilisé présente un diamètre de grains inférieur ou égal à 200 µm. On choisira de préférence une granulométrie de la farine et du chlorure de sodium proche l'une de l'autre.

Pour réaliser les précurseurs en vue de constituer la préforme, on opère de la manière suivante ou équivalente. Le mélange initial est constitué de 12 à 25% de liant organique, par exemple de la farine de grains, de 72 à 87% de chlorure de sodium et de 1 à 3% de kalinite. Il s'agit bien entendu de pourcentage en masse. Le mélange est réalisé en versant le liant organique dans le sel sous agitation puis la kalinite. Cette opération dure quelques minutes.

Le mélange intime ainsi obtenu est ensuite répandu et soumis à une granulation sur lit d'air fluidisé. Cette manière de faire permet d'obtenir une granulométrie des précurseurs régulière et contrôlée, de l'ordre de 1 à 10 mm. Avantageusement, le diamètre des précurseurs est de l'ordre de 4 mm. Les précurseurs obtenus sont secs et rigides et se présentent sous la forme d'ellipsoïdes ou de sphères.

Le choix de la kalinite est important dans l'invention car c'est elle qui permet d'obtenir une mousse métallique présentant les avantages indiqués précédemment. On sait que la kalinite est un sulfate minéral ou alun de potassium de formule KAl(SO₄)₂.11H₂O dont le point de fusion est de l'ordre de 92-93°C. On a noté avantageusement que la kalinite devient anhydre à une température de l'ordre de 200 °C. Elle permet d'évacuer toutes les molécules d'eau résiduelles présentes dans les précurseurs lors de la montée en température du moule et ainsi de libérer des espaces intermoléculaires dans les précurseurs.

Avantageusement, la préforme peut être constituée de précurseurs comprenant 17% de farine de grains, 81% de chlorure de sodium et 2% de kalinite.

Avantageusement, la préforme peut être constituée de précurseurs comprenant 13% de farine de grains, 84% de chlorure de sodium et 3% de kalinite.

Avantageusement encore, la préforme peut être constituée de précurseurs comprenant 24% de farine de grains, 74,5% de chlorure de sodium et 1,5% de kalinite.

Pour mettre en oeuvre la préforme, on s'y prend de la manière suivante ou de façon équivalente.

On introduit les précurseurs dans un moule sans qu'ils soient agglomérés entre eux et la préforme ainsi obtenue a la forme du moule utilisé. Bien entendu, la forme interne du moule dépend de la forme finale de la mousse métallique que l'on veut obtenir. Les précurseurs peuvent être éventuellement densifiés par vibration mécanique du moule afin de réduire l'espace libre entre ces précurseurs.

On place alors le moule renfermant la préforme dans un four et on s'arrange pour le moule soit traversé par un courant d'air ou flux d'air. Le moule est alors chauffé progressivement à une température comprise entre 300 et 600 °C et on maintient cette température pendant 10 à 40 mn. Pendant toute la durée du chauffage, on fait circuler un courant d'air ou flux d'air à travers la préforme. Cette circulation d'air dans le moule permet l'activation rapide de la kalinite et participe à la pyrolyse des précurseurs.

On introduit le métal en fusion pour remplir les espaces libres entre les précurseurs, on laisse · refroidir et on lave la mousse métallique.

En variante, on peut activer la kalinite avant l'introduction des précurseurs dans le moule. Dans ce cas, la montée en température sous atmosphère des précurseurs s'effectue pendant 15 mn, puis on introduit les précurseurs dans le moule, on densifie et on coule le métal fondu.

Les conditions d'utilisation du métal en fusion sont bien connues dans les opérations de fonderie et il n'est pas nécessaire de les décrire en détail.

Durant la montée en température, on réalise la pyrolyse de la préforme qui permet l'activation de la kalinite et en conséquence une meilleure dissolution de la préforme après la formation du milieu poreux de mousse métallique. Cette dissolution est très rapide et apparaît sous forme effervescente et les précurseurs sont alors évacués sans difficulté.

Après lavage, l'état de surface de la mousse métallique obtenue ne présente aucun résidu salin ou carboné et son état de surface ne présente aucune corrosion et/ou oxydation. Il n'y a donc pas de réaction entre le métal et le chlorure de sodium contrairement aux mousses métalliques obtenues suivant les procédés de l'art antérieur.

On obtient les mêmes résultats quelle que soit la composition de la préforme indiquée précédemment.

Le procédé selon l'invention est particulièrement avantageux pour fabriquer des mousses d'aluminium ou des mousses d'alliage d'aluminium. Les alliages référencés AZ7, AS7G3, AS7G06, AS10 ou AS9 sont couramment utilisés à cette fin. Bien entendu, d'autres métaux peuvent être utilisés suivant le procédé selon l'invention pour fabriquer des mousses métalliques comme par exemple le zinc ou le magnésium.

Des noyaux de fonderie peuvent être disposés au sein de la préforme pour réaliser des chemins particuliers. C'est par exemple le cas lorsque l'on veut établir un circuit particulier entre deux faces de la mousse métallique.

De façon générale, le procédé selon l'invention peut être mis en oeuvre avec tous les métaux ou alliages métalliques dont le point de fusion est inférieur à 750 °C.

De manière avantageuse, le métal en fusion peut être introduit sous pression en étant injecté dans le moule ou par gravité naturelle.

Avantageusement, on peut prévoir avant introduction de la préforme dans le moule, une étape d'humidification et de séchage des précurseurs. L'humidification permet d'agglomérer entre eux les précurseurs et d'augmenter la densité relative de la préforme, de contrôler les caractéristiques morphologiques de la mousse métallique en particulier au niveau du diamètre de col et de brin.

Le col correspond à l'ouverture entre les pores de la mousse qui correspond à la cavité laissée libre par les sphères de précurseurs après extraction et le brin est constitué par le squelette de la mousse métallique, c'est-à-dire l'espace entre les sphères de précurseurs.

Cette humidification est réalisée avec 3 à 10% d'eau par rapport à la masse des précurseurs. Il va de soi que le séchage peut être réalisé pendant la pyrolyse en raison du courant d'air ou flux d'air circulant au sein de la préforme.

L'invention concerne également les mousses métalliques à porosités ouvertes obtenues suivant le procédé conforme à l'invention dont la densité relative ou porosité est comprise entre 65 et 85% environ avec des diamètres de pores de l'ordre de 4 mm. Il va de soi que la porosité correspond au pourcentage du volume d'espaces libres par rapport au volume total de la mousse métallique.

## Revendications

1. Préforme destinée à la fabrication d'une mousse métallique ayant une porosité comprise entre 62 et 85%, **caractérisée en ce qu'**elle comprend un ensemble de précurseurs se présentant sous la forme de billes constitué d'un mélange de 12 à 25% en masse de liant organique, 72 à 87% en masse de chlorure de sodium et de 1 à 3% en masse de kalinite.

2. Préforme selon la revendication 1, **caractérisée en ce que** les précurseurs présentent un diamètre de l'ordre de 1 à 10 mm et préférentiellement de 4 mm.

3. Préforme selon la revendication 1 ou 2, **caractérisée en ce que** les précurseurs sont obtenus par granulation du mélange sur lit d'air fluidisé.

4. Préforme selon l'une des revendications 1 à 3, **caractérisée en ce que** le liant organique est constitué par de la farine de grains.

5. Préforme selon la revendication 4, **caractérisée en ce que** les précurseurs comprennent 17% en masse de farine de grains, 81% en masse de chlorure de sodium et 2% en masse de kalinite.

6. Préforme selon la revendication 4, **caractérisée en ce que** les précurseurs comprennent 13% en masse de farine de grains, 84% en masse de chlorure de sodium et 3% en masse de kalinite, ou bien 24% en masse de farine de grains, 74,5% en masse de chlorure de sodium et 1,5% en masse de kalinite.

7. Procédé de fabrication d'une mousse métallique à l'aide de la préforme selon l'une quelconque des revendications précédentes, **caractérisé en ce qu'**il comprend les étapes suivantes :
- on introduit les précurseurs dans un moule que l'on soumet à des vibrations afin de délimiter des espaces libres,
- on soumet le moule à un chauffage à une température comprise entre 300 et 600°C pour activer la kalinite, en injectant un flux d'air dans le moule pendant la montée en température,
- on maintient la température pendant une durée de 10 à 40 minutes,
- on introduit le métal fondu pour remplir les espaces libres entre les précurseurs, et
- on laisse refroidir et on lave la mousse métallique.

8. Procédé de fabrication d'une mousse métallique selon la revendication 7, **caractérisé en ce qu'**il comprend une étape d'humidification et de séchage des précurseurs avant l'étape de chauffage.

9. Procédé de fabrication d'une mousse métallique selon la revendication 8, **caractérisé en ce que** l'humidification est réalisée avec 3 à 10% en masse d'eau par rapport à la masse des précurseurs.

10. Procédé de fabrication d'une mousse métallique selon l'une des revendications 7 à 9, **caractérisé en ce que** le métal fondu est un métal pur, en particulier l'aluminium, ou un alliage métallique.

11. Procédé de fabrication d'une mousse métallique selon l'une des revendications 7 à 10, **caractérisé en ce que** des noyaux de fonderie sont disposés au sein de la préforme pour réaliser des chemins particuliers.

12. Procédé de fabrication d'une mousse métallique selon l'une quelconque des revendications 7 à 11, **caractérisé en ce qu'**on ajuste la taille des précurseurs et les connexions possibles entre les précurseurs de façon à ce que la mousse métallique présente une porosité ouverte comprise entre 65 et 85%.

## Patentansprüche

1. Vorformling, welcher für die Herstellung eines metallischen Schaums mit einer Porosität von zwischen 62 und 85% vorgesehen ist, **dadurch gekennzeichnet, dass** er eine Menge von Vorläufern aufweist, die sich in der Form von Kugeln darstellen, welche aus einer Mischung von 12 bis 25% in Masse eines organischen Bindemittels, 72 bis 87% in Masse von Natriumchlorid und von 1 bis 3% in Masse von Kalinit besteht.

2. Vorformling nach Anspruch 1, **dadurch gekennzeichnet, dass** die Vorläufer einen Durchmesser in der Größenordnung von 1 bis 10 mm und vorzugsweise von 4 mm aufweisen.

3. Vorformling nach Anspruch 1 oder 2, **dadurch gekennzeichnet, dass** die Vorläufer durch Granulierung der Mischung über Luft-Wirbelschicht erzielt werden.

4. Vorformling nach einem der Ansprüche 1 bis 3, **dadurch gekennzeichnet, dass** das organische Bindemittel aus Getreidemehl besteht.

5. Vorformling nach Anspruch 4, **dadurch gekennzeichnet, dass** die Vorläufer 17% in Masse Getreidemehl, 81% in Masse Natriumchlorid und 2% in Masse Kalinit aufweisen.

6. Vorformling nach Anspruch 4, **dadurch gekennzeichnet, dass** die Vorläufer 13% in Masse Getreidemehl, 84% in Masse Natriumchlorid und 3% in Masse Kalinit beziehungsweise 24% in Masse Getreidemehl, 74,5% in Masse Natriumchlorid und 1,5% in Masse Kalinit aufweisen.

7. Verfahren zur Herstellung eines metallischen Schaums mit Hilfe des Vorformlings nach irgendeinem der vorhergehenden Ansprüche, **dadurch gekennzeichnet, dass** es die folgenden Schritte aufweist:
- die Vorläufer werden in eine Form eingeführt, welche Schwingungen unterworfen wird, um Zwischenräume zu begrenzen,
- die Form wird einer Erwärmung auf eine Temperatur zwischen 300 und 600°C unterworfen, um das Kalinit zu aktivieren, indem ein Luftstrom in die Form während des Temperaturanstiegs eingeleitet wird,
- die Temperatur wird über eine Dauer von 10 bis 40 Minuten gehalten,
- das geschmolzene Metall wird eingeführt, um die Zwischenräume zwischen den Vorläufern zu füllen, und
- abkühlen lassen und der metallische Schaum wird gewaschen.

8. Verfahren zur Herstellung eines metallischen Schaums nach Anspruch 7, **dadurch gekennzeichnet, dass** es einen Schritt des Befeuchtens und des Trocknens der Vorläufer vor dem Heizschritt aufweist.

9. Verfahren zur Herstellung eines metallischen Schaums nach Anspruch 8, **dadurch gekennzeichnet, dass** das Befeuchten mit 3 bis 10% in Masse von Wasser in Bezug auf die Masse der Vorläufer erzielt wird.

10. Verfahren zur Herstellung eines metallischen Schaums nach einem der Ansprüche 7 bis 9, **dadurch gekennzeichnet, dass** das geschmolzene Metall ein reines Metall, insbesondere Aluminium, oder eine metallische Legierung ist.

11. Verfahren zur Herstellung eines metallischen Schaums nach einem der Ansprüche 7 bis 10, **dadurch gekennzeichnet, dass** Gusskerne innerhalb der Vorform angeordnet sind, um besondere Pfade zu erzielen.

12. Verfahren zur Herstellung eines metallischen Schaums nach irgendeinem der Ansprüche 7 bis 11, **dadurch gekennzeichnet, dass** die Größe der Vorläufer und die möglichen Verbindungen zwischen den Vorläufern derartig eingestellt werden, dass der metallische Schaum eine offene Porosität zwischen 65 und 85% aufweist.

## Claims

1. A preform intended for the manufacture of a metal foam having a porosity of between 62% and 85%, **characterised in that** it comprises a set of precursors in the form of balls formed of a mixture of 12% to 25% of organic binder, 72% to 87% of sodium chloride and 1 to 3% of kalinite.

2. A preform according to Claim 1, **characterised in that** the precursors have a diameter of around 1 to 10 mm and preferably of 4 mm.

3. A preform according to Claim 1 or 2, **characterised in that** the precursors are obtained by granulating the mixture using the fluidized bed process.

4. A preform according to one of Claims 1 to 3, **characterised in that** the organic binder is constituted by grain flour.

5. A preform according to Claim 4, **characterised in that** the precursors comprise 17% of grain flour, 81% of sodium chloride and 2% of kalinite.

6. A preform according to Claim 4, **characterised in that** the precursors comprise 13% of grain flour, 84% of sodium chloride and 3% of kalinite, or else 24% of grain flour, 74.5% of sodium chloride and 1.5% of kalinite.

7. A process for manufacturing a metal foam using a preform according to any one of the above Claims, **characterised in that** it comprises the following steps:
- the precursors are introduced into a mould which is then vibrated to define free spaces,
- the mould is heated to a temperature of between 300 and 600°C to activate the kalinite, while injecting an air flow into the mould during the rise in temperature,
- the temperature is maintained for 10 to 40 minutes,
- the molten metal is poured in to fill the free spaces between the precursors, and
- it is allowed to cool and the metal foam is washed.

8. A process to manufacture a metal foam according to Claim 7, **characterised in that** it comprises a step of humidifying and drying the precursors before the heating step.

9. A process to manufacture a metal foam according to Claim 8, **characterised in that** the humidification is performed using 3 to 10% of water relative to the mass of the precursors.

10. A process to manufacture a metal foam according to one of Claims 7 to 9, **characterised in that** the molten metal is a pure metal, in particular aluminium, or a metal alloy.

11. A process to manufacture a metal foam according to one of Claims 7 to 10, **characterised in that** foundry cores are arranged in the preform to produce specific paths.

12. A process to manufacture a metal foam according to one of Claims 7 to 11, **characterised in that** the size of the precursors and the possible connections between the precursors are adjusted so that the metal foam has an open porosity between 65 and 85%.
